# EUROPÄISCHE PATENTSCHRIFT

(11) **EP 3 870 870 B1**
(45) Veröffentlichungstag und Bekanntmachung des Hinweises auf die Patenterteilung: **23.04.2025**
(21) Anmeldenummer: 19789648.3
(22) Anmeldetag: 15.10.2019
(51) Int. Cl.: F16C 35/04, F16C 35/067, F16C 35/077, B25J 9/10

(54) **LAGERANORDNUNG**
BEARING ASSEMBLY
ENSEMBLE PALIER

(30) Priorität: 26.10.2018 DE 102018126852
(43) Veröffentlichungstag der Anmeldung: 01.09.2021
(73) Patentinhaber: KUKA Deutschland GmbH, 86165 Augsburg (DE)
(72) Erfinder: HANDFEST, Alexander, 86568 Hollenbach (DE)
(74) Vertreter: Oelke, Jochen
(86) Internationale Anmeldenummer: PCT/EP2019/077853
(87) Internationale Veröffentlichungsnummer: WO 2020/083700

(56) Entgegenhaltungen:
- WO-A1-89/01101
- DE-A1- 102007 029 743
- DE-A1- 102016 104 376
- DE-A1- 102016 107 866
- US-A1- 2016 223 039

## Beschreibung

Die Erfindung betrifft eine Lageranordnung mit den Merkmalen im Oberbegriff des Hauptanspruchs.

Eine solche Lageranordnung ist aus der Praxis bekannt. Sie weist einen Lagerflansch und eine Flanschaufnahme hierfür auf, die eine gemeinsame Längsachse, einen gegenseitigen axialen Anschlag und eine Fixierung zur Sicherung der gegenseitigen Anschlagstellung haben. Der Lagerflansch hat einen radialen Bund oder Rohrflansch, der an einer Stirnseite der Flanschaufnahme anliegt und hier mit Schrauben fixiert ist.

Die US2016223039A1 beschreibt eine angetriebene Radeinheit mit Lageranordnung. Hierbei sind ein Lagerflansch, eine Flanschaufnahme und ein Anschlag vorgesehen. Eine Fixierung spannt den Lagerflansch und die Flanschaufnahme axial in eine gegenseitige Anschlagstellung.

Es ist Aufgabe der vorliegenden Erfindung, eine verbesserte Lageranordnung aufzuzeigen.

Die Erfindung löst diese Aufgabe mit den Merkmalen im Hauptanspruch.

Die Fixierung der beanspruchten Lageranordnung ist als Keilspannmittel ausgebildet, das quer, insbesondere radial, zur Längsachse betätigbar ist und dabei den Lagerflansch und die Flanschaufnahme axial in die gegenseitige Anschlagstellung spannt.

Das Keilspannmittel weist erfindungsgemäß wechselweise am Lagerflansch und an der Flanschaufnahme angeordnete und quer, insbesondere radial, zur Längsachse ausgerichtete und formschlüssig ineinander greiffähige Spannelemente mit einer Keilfläche auf.

Erfindungsgemäß ist das am Lagerflansch angeordnete Spannelement als umfangseitige, ringförmige, Nut und das andere an der Flanschaufnahme angeordnete Spannelement als ein oder mehrere radiale/-r Spannstift/-e, insbesondere als Schraubstift/-e, ausgebildet.

Weiterhin erfindungsgemäß hat die Nut, eine größere axiale Breite als der Spannstift und weist eine zum Anschlag weisende schräge und eine Keilfläche bildende Seitenwand auf.

Das Keilspannmittel kann lokal getrennt vom besagten axialen Anschlag angeordnet sein. Es kann bedarfsweise zum Fixieren der Verbindung von Lagerflansch und Flanschaufnahme aktiviert und zum Lösen der Verbindung sowie zur Demontage deaktiviert werden.

Die beanspruchte Lageranordnung hat den Vorteil, dass sie mit einem geringeren Fertigungs- und Montageaufwand auskommt und außerdem Platz spart. Der Lagerflansch kann vereinfacht und für seine Hauptfunktion der Aufnahme und Abstützung von Lagerung, Dichtung etc. eines Drehkörpers optimiert werden. Der Lagerflansch kann hierfür insbesondere als kostengünstiges Drehteil oder Gussteil ausgebildet sein.

Ferner kann die für den axialen Anschlag erforderliche Kontaktfläche wesentlich reduziert werden. Der bisherige Platzbedarf für die Schrauben kann entfallen. Der Lagerflansch und die Flanschaufnahme können dadurch im Durchmesser oder Querschnitt deutlich kleiner bauen.

Der Lagerflansch und die Flanschaufnahme können ineinander gesteckt werden. Sie können als rotationssymmetrische Teile mit einem kreisrunden Querschnitt und einer gemeinsamen zentralen Längsachse ausgebildet sein. Sie können alternativ in anderer Weise steckbar sein und einen anderen, z.B. prismatischen Querschnitt haben. Die gegenseitige Position von Lagerflansch und Flanschaufnahme in Querrichtung, insbesondere in radialer Richtung, kann durch Passflächen erreicht werden. Diese können mit einer höheren Überdeckung, insbesondere als Übergangs- oder Übermaßpassung, gewählt werden. Hierdurch können zumindest teilweise die Betriebskräfte aufgenommen werden.

Die beanspruchte Lageranordnung hat ferner den Vorteil, dass die Fixierung bzw. das Keilspannmittel besser von außen zugänglich ist. Besondere Vorteile ergeben sich dabei in Verbindung mit einer Roboterstruktur, an der die Lageranordnung vorgesehen ist. Die Lageraufnahme kann ein separates Teil oder ein z.B. gehäuseartiges Teil der Roboterstruktur oder eines anderen Gerätes sein.

Die als Keilspannmittel ausgebildete Fixierung hat außerdem den Vorteil, dass sie eine zuverlässige Sicherung der gegenseitigen Anschlagstellung des Lagerflansches und der Flanschaufnahme ermöglicht. Hierbei können hohe axiale Spann- und Anpresskräfte entwickelt werden. Diese erlauben eine Aufnahme der verbleibenden Betriebskräfte und sichern die axiale Position des Lagerflansches in der Flanschaufnahme.

Das Keilspannmittel kann in unterschiedlicher Weise ausgebildet sein. Die umfangsseitige Anordnung zwischen dem Lagerflansch und der Flanschaufnahme hat den Vorteil einer besonders guten Zugänglichkeit und einer direkten Kraftübertragung.

Die erfindungsgemäß formschlüssig ineinander greiffähigen und quer zur besagten Längsachse ausgerichteten Spannelemente können in unterschiedlicher Weise ausgebildet sein. Sie weisen eine Keilfläche auf, mit der die quer zur Längsachse gerichtete Zustellbewegung des einen Spannelements in eine axiale Stell- und Spannbewegung für die besagte gegenseitige Anschlagstellung mit wenig Aufwand und unter Entwicklung hoher Kräfte umgesetzt werden kann. Durch die Querausrichtung und den gegenseitigen formschlüssigen Eingriff ist die Verbindung auch sehr betriebssicher.

Die erfindungsgemäße Ausbildung der Spannelemente als Vertiefung und als hier eingreifender Vorsprung ist für die Formschlusswirkung besonders günstig. Die besagte Keilfläche kann auf besonders einfache Weise durch eine schräge Vertiefungswand gebildet werden. Die Zahl und Anordnung der Vorsprünge kann variieren.

Erfindungsgemäß ist eine Ausbildung des vertieften Spannelements als umfangsseitige und ringförmige Nut am Lagerflansch, wobei in die Nut ein oder mehrere andere vorspringende Spannelemente eingreifen gegeben. Diese sind am Lagerflansch aufgenommen und als zustellbare radiale Spannstifte ausgebildet. Vorteilhaft ist eine Ausbildung als Schraubstift, der von außen durch eine Gewindebohrung im Mantel der Flanschaufnahme eingedreht werden kann.

Der Lagerflansch und die Flanschaufnahme können jeweils als Hülse oder Rohr ausgebildet sein und in der besagten Weise ineinander gesteckt werden, wobei sie kleine Anschlagflächen zur Bildung des gegenseitigen Anschlags aufweisen können. Der Lagerflansch kann ein oder mehrere Aufnahmemittel für ein Lager eines Drehkörpers, für eine Dichtung oder dergleichen aufweisen. Die Flanschaufnahme kann z.B. als gehäuseartiges Teil eines Geräts, insbesondere eines Industrieroboters, ausgebildet sein.

Von den Vorteilen der beanspruchten Lageraufnahme profitiert auch ein Gerät, insbesondere ein Industrieroboter, der mit mindestens einer solchen Lageranordnung ausgestattet ist.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Lageranordnung mit einem Lagerflansch und einer Lageraufnahme sowie weiteren Teilen in einem axialen Längsschnitt und
- Figur 2:: den Lagerflansch in Einzeldarstellung und in einem axialen Längsschnitt.

Die Erfindung betrifft eine Lageranordnung (1) mit einem Lagerflansch (3) und einer Flanschaufnahme (4). Die Erfindung betrifft ferner ein Gerät (2), insbesondere einen Industrieroboter, das mit einer solchen Lageranordnung (1) ausgestattet ist. Die Erfindung bezieht sich ferner auf ein Verfahren zur Herstellung bzw. Bildung einer solchen Lageranordnung (1).

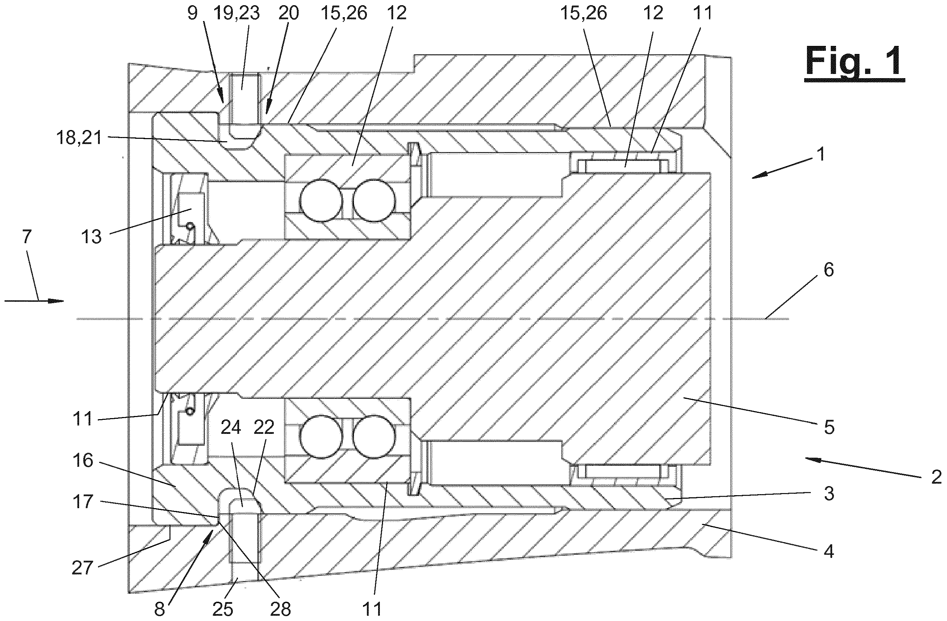

Die im zentralen Längsschnitt von Figur 1 gezeigte Lageranordnung (1) weist einen Lagerflansch (3) und eine Flanschaufnahme (4) auf, die eine gemeinsame und bevorzugt konzentrische Längsachse (6) haben können. Der Lagerflansch (3) und die Flanschaufnahme (4) besitzen einen gegenseitigen axialen Anschlag (8), an dem sie in Richtung der Längsachse (6) gegenseitig positioniert werden können. Die Lageranordnung (1) weist ferner eine Fixierung zur Sicherung dieser gegenseitigen Anschlagstellung von Lagerflansch (3) und Flanschaufnahme (4) auf.

Der Lagerflansch (3) und die Flanschaufnahme (4) können in einer axialen Einsteckrichtung oder Einbaurichtung (7) zusammengesteckt werden. Der Lagerflansch (3) kann dabei in der Flanschaufnahme (4) formschlüssig aufgenommen und fixiert werden.

Der Lagerflansch (3) und die Flanschaufnahme (4) sind jeweils als Hülse oder Rohr ausgebildet. Sie weisen am umfangseitigen Kontaktbereich aneinander angepasste innere und äußere Mantelkonturen auf. Sie weisen außerdem einen gegenseitig angepassten Querschnitt auf. Im gezeigten Ausführungsbeispiel kann die Querschnittsform z.B. kreisrund ausgebildet sein. Alternativ kann sie prismatisch oder oval oder in anderer Weise ausgebildet sein.

Zur Bildung des gegenseitigen axialen Anschlags (8) weist der Lagerflansch (3) an seinem in Einbaurichtung (7) hinteren stirnseitigen Ende einen quer, insbesondere radial, zur Achse (6) vorstehenden Bund (16) mit einer stirnseitig in Einbaurichtung (7) weisenden Anschlagfläche (17) auf. Der Bund (16) kann an der Hülse angeformt sein. Er kann ringförmig und umfangseitig umlaufend oder unterbrochen ausgebildet sein.

Die Flanschaufnahme (4) weist am Innenmantel frontseitig eine Ausnehmung (27) mit einer gegen die Einbaurichtung (7) weisenden Anschlagfläche (28) auf. Beim Einstecken taucht der Bund (16) in die Ausnehmung (27) ein, wobei die gegeneinander gerichteten Anschlagflächen (17,28) zur Anlage kommen. Für den axialen Anschlag (8) genügt eine kleine quer gerichtete oder radiale Überdeckung von z.B. plan gedrehten Anschlagflächen (17,28). Die Ausnehmung (27) kann kostengünstig als Ausdrehung am inneren Hülsenmantel der Flanschaufnahme (4) hergestellt werden.

Die Fixierung ist als Keilspannmittel (9) ausgebildet. Dieses kann in Einbaurichtung (7) hinter oder vor dem axialen Anschlag (8) angeordnet sein. Das Keilspannmittel (9) ist quer, insbesondere radial zur Längsachse betätigbar. Hierbei kann das Keilspannmittel (9) den Lagerflansch (3) und die Flanschaufnahme (4) durch seine Keilwirkung axial in die gegenseitige Anschlagstellung am axialen Anschlag (8) spannen. Das Keilspannmittel (9) ist umfangseitig zwischen dem Lagerflansch (3) und der Flanschaufnahme (4) angeordnet. Es ist quer, insbesondere radial, zur Längsachse (6) ausgerichtet.

Das Keilspannmittel (9) weist wechselweise am Lagerflansch (3) und an der Flanschaufnahme (4) angeordnete sowie quer, insbesondere radial, zur Längsachse (6) ausgerichtete sowie formschlüssig ineinander greiffähige Spannelemente (18,19) mit einer Keilfläche (20) auf. Der formschlüssige Keileingriff kann bedarfsweise gelöst werden, z.B. zur Demontage des Lagerflansches (3).

Zur Bildung des formschlüssigen Eingriffs sind die Spannelemente (18,19) als Vertiefung und als Vorsprung ausgebildet. Eine Keilfläche (20) kann an einem oder beiden Spannelementen (18,19), insbesondere an der Vertiefung angeordnet sein.

Im gezeigten Ausführungsbeispiel ist ein vertieftes Spannelement (18) am Lagerflansch (3) angeordnet. Es ist z.B. als umfangseitige und bevorzugt ringförmige Nut (21) ausgebildet. Die Nut (21) befindet sich am Außenmantel (14) des Lagerflansches (3). Die Ringnut kann eine geschlossene umlaufende Ringform, insbesondere Kreisringform, haben.

Die Vertiefung (18), insbesondere Nut (21), ist z.B. in Einbaurichtung (7) hinter dem axialen Anschlag (8) angeordnet. Sie kann in unmittelbarer Nachbarschaft zum axialen Anschlag (8) bzw. zur Anschlagfläche (16) angeordnet sein oder alternativ in Axialrichtung distanziert sein.

Ein oder mehrere andere und vorspringende Spannelemente (19) sind z.B. an der Flanschaufnahme (4) angeordnet. Im gezeigten Ausführungsbeispiel sind mehrere vorspringende Spannelemente (19) in Umfangsrichtung verteilt angeordnet. Diese können z.B. jeweils als radialer Spannstift (23), insbesondere als Schraubstift ausgebildet sein. Ein Schraubstift kann durch eine vorbereitete Gewindebohrung (23) am Mantel der Flanschaufnahme (4) aufgenommen sein. Der Schraubstift kann von außen durch den Mantel in die Vertiefung, insbesondere Nut (21), durch eine Schraubbewegung eingeführt und bedarfsweise auch wieder herausgedreht werden.

Im gezeigten Ausführungsbeispiel sind zumindest zwei diametral gegenüberliegende Spannelemente (19) bzw. Spannstifte (23) vorhanden, die an verschiedenen, insbesondere gegenüberliegenden Stellen in die Vertiefung (18) bzw. Nut (21) eingreifen.

Die Vertiefung (18), insbesondere die Nut (21), weist eine größere axiale Breite in Einbaurichtung (7) als der Vorsprung (19), insbesondere der Spannstift (23), auf. In der gezeigten Ausführungsform weist die Vertiefung (18), insbesondere Nut (21), an der vom Anschlag (8) abgewandten Seite eine schräge Seitenwand (22) auf, die eine Keilfläche (20) bildet. Die Schräglage ist auf die Achse (6) bezogen. Die schräge Seitenwand (22) weist zum Anschlag (8).

Der Vorsprung (19), insbesondere Spannstift (23), kann einen frontseitigen Kopf oder eine Spitze (24) mit einer konischen Form aufweisen. Durch den Konus kann ebenfalls eine Keilfläche (20) gebildet werden.

Bei der quer zur Achse (6) gerichteten Betätigung des Vorsprungs (19), insbesondere Spannstifts (23), stößt dessen Kopf (24) gegen die schräge Seitenwand (22). Die quer bzw. radial gerichtete Zustellkraft wird dabei in eine in Einbaurichtung (7) weisende axiale Spannkraft umgelenkt, mit der die Anschlagflächen (17,28) gegeneinander gepresst werden.

Bei der gezeigten Anordnung wird der Lagerflansch (3) in Anschlagstellung an der Flanschaufnahme (4) gezogen. Bei einer umgedrehten Anordnung des Keilspannmittels (9) in Einbaurichtung (7) vor dem Anschlag erfolgt ein Andrücken des Lagerflanschs (3).

Der Lagerflansch (3) und die Flanschaufnahme (4) weisen an ihrem Umfang wechselweise zusammenwirkende Paarungen von Führungsflächen (15,26) auf. Diese können jeweils als z.B. ringförmige Passflächen ausgebildet sein. Eine Führungsfläche (15) am Außenmantel (14) des Lagerflanschs (3) kann in Einbaurichtung (7) hinter dem Keilspannmittel (9), insbesondere im unmittelbaren axialen Anschluss an die Vertiefung (18) bzw. Nut (21), angeordnet sein. Die Vertiefung (18) bzw. Nut (21) befindet sich dabei zwischen der Führungs- bzw. Passfläche (15) und dem axialen Anschlag (8).

Die Führungs- oder Passfläche (15) kann als ein über den Außenmantel (14) geringfügig hinausragender umfangseitiger Bund ausgebildet sein. Der quer gerichtete bzw. radiale Überstand ist geringer als beim Bund (16) und der Anschlagfläche (17). Die an der Flanschaufnahme (4) angeordnete Führungs- bzw. Passfläche (26) kann ebenfalls in Querrichtung bzw. Radialrichtung abgesetzt sein.

Ein oder mehrere weitere Paarungen von Führungs- oder Passflächen (15,26) können mit Distanz in Einbaurichtung (7) nachgeordnet sein. Eine solche weitere Paarung ist z.B. am anderen stirnseitigen Ende des Lagerflansches (3) angeordnet.

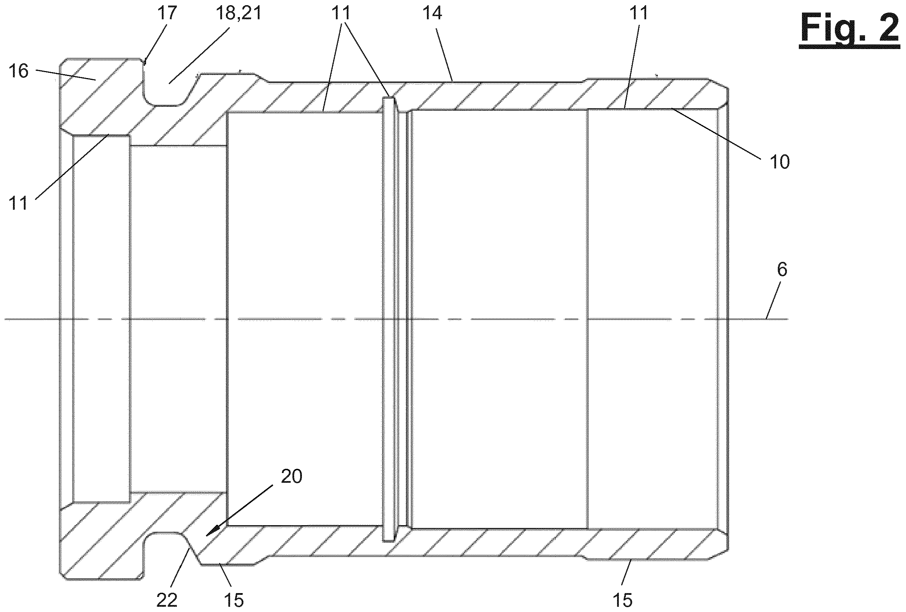

Wie Figur 1 und 2 verdeutlichen, hat der Lagerflansch (3) am Innenmantel (10) ein oder mehrere Aufnahmemittel (11) für ein Lager (12) eines Drehkörpers (5), für einen Sicherungsring, für eine Dichtung (13) oder dergleichen. Der Innenmantel (10) kann abgestuft sein, wodurch ein in axialer Nähe zum Anschlag (8) angeordnetes Wälzlager, insbesondere Rollenlager, zwischen dem Lagerflansch (3) und dem Drehkörper (5) eingespannt und mit dem Sicherungsring zusätzlich gesichert werden kann. Am anderen stirnseitigen Ende des Lagerflansches (3) kann ein weiteres Lager (12) angeordnet sein, das z.B. als Nadellager ausgebildet ist. Die Dichtung (13) ist am vorderen Ende des Lagerflansches (3) angeordnet und dichtet den Freiraum zwischen dem Drehkörper (5) und dem Innenmantel (10) ab.

Die Flanschaufnahme (4) kann als z.B. gehäuseartiges Teil eines Gerätes (2) ausgebildet sein. Das Gerät (2) kann z.B. ein Industrieroboter sein. Die Flanschaufnahme (4) kann dabei als hohles Teil eines Gehäuses für eine Roboterachse ausgebildet sein.

Abwandlungen der gezeigten und beschriebenen Ausführungsformen sind in verschiedener Weise möglich.

Ein vertieftes Spannelement (18) kann z.B. von mehreren am Außenmantel (14) des Lagerflansches (3) in Umfangsrichtung verteilt angeordneten punkt- oder linienartigen Vertiefungen gebildet werden. Dies kann z.B. ein Senkloch mit schräger Seitenwand oder Flanke sein.

Ein vorspringendes Spannelement (19) kann z.B. als gebogene Spannbacke ausgebildet sein, die in einer quer zur Achse (6) ausgerichteten Backenaufnahme gleitfähig geführt und von einer geeigneten Zustellvorrichtung beaufschlagt und in Spannstellung arretiert wird. Die Spannbacke kann frontseitig eine Schrägfläche oder Keilfläche aufweisen, die mit einer entsprechenden schrägen Gegenfläche an der Vertiefung (18), insbesondere einer ringartig gebogenen Nut (21), zusammenwirkt.

In einer Abwandlung kann das als Vertiefung ausgebildete Spannelement (18) dem Lagerflansch (3) und das als Vorsprung ausgebildete Spannelement (19) der Flanschaufnahme (4) zugeordnet sein. Es ist ferner möglich, ein vertieftes Spannelement (18) relativ zu einem vorspringenden Spannelement (19) zu bewegen.

Die Steckzuordnung von Lagerflansch (3) und Flanschaufnahme (4) kann vertauscht werden, wobei der Lagerflansch (3) außenseitig angeordnet ist.

Die vorgenannte Querausrichtung der Spannelemente (18,19) zur Achse (6) schließt außer der gezeigten rechtwinkligen Ausrichtung auch schräge Ausrichtungen ein. Die Keilflächenausbildung und die Keilspannwirkung ändern sich entsprechend.

### BEZUGSZEICHENLISTE

- 1: Lageranordnung
- 2: Gerät, Industrieroboter
- 3: Lagerflansch
- 4: Flanschaufnahme
- 5: Drehkörper, Welle
- 6: Achse
- 7: Einbaurichtung
- 8: Anschlag axial
- 9: Keilspannmittel
- 10: Innenmantel
- 11: Aufnahmemittel
- 12: Lager
- 13: Dichtung
- 14: Außenmantel
- 15: Führungsfläche, Passfläche
- 16: Bund
- 17: Anschlagfläche
- 18: Spannelement, Vertiefung
- 19: Spannelement, Vorsprung
- 20: Keilfläche
- 21: Nut, Ringnut
- 22: Seitenwand schräg
- 23: Spannstift, Schraubstift
- 24: Kopf, Spitze
- 25: Stiftaufnahme, Gewindebohrung
- 26: Führungsfläche, Passfläche
- 27: Ausnehmung
- 28: Anschlagfläche

## Patentansprüche

1. Lageranordnung, aufweisend einen Lagerflansch (3) und eine Flanschaufnahme (4) mit einer Längsachse (6), die einen gegenseitigen axialen Anschlag (8) und eine Fixierung zur Sicherung der gegenseitigen Anschlagstellung aufweisen, wobei die Fixierung als Keilspannmittel (9) ausgebildet ist, das quer, insbesondere radial, zur Längsachse (6) betätigbar ist, wobei das Keilspannmittel (9) den Lagerflansch (3) und die Flanschaufnahme (4) axial in die gegenseitige Anschlagstellung spannt und
das Keilspannmittel (9) wechselweise am Lagerflansch (3) und an der Flanschaufnahme (4) angeordnete und quer, insbesondere radial, zur Längsachse (6) ausgerichtete, sowie formschlüssig ineinander greiffähige Spannelemente (18,19) mit einer Keilfläche (20) aufweist, **dadurch gekennzeichnet,**
**dass**
das am Lagerflansch (3) angeordnete Spannelement (18) als umfangseitige, ringförmige, Nut (21) und das andere an der Flanschaufnahme (4) angeordnete Spannelement (19) als ein oder mehrere radiale/-r Spannstift/-e (23), insbesondere als Schraubstift/- e, ausgebildet ist, wobei
die Nut (21), eine größere axiale Breite als der Spannstift (23) hat und eine zum Anschlag (8) weisende schräge und eine Keilfläche (20) bildende Seitenwand (22) aufweist.

2. Lageranordnung nach Anspruch 1, **dadurch**
**gekennzeichnet, dass** das Keilspannmittel (9) umfangseitig zwischen dem Lagerflansch (3) und der Flanschaufnahme (4) angeordnet ist.

3. Lageranordnung nach einem der vorhergehenden Ansprüche, **dadurch gekennzeichnet, dass** der Lagerflansch (3) und die Flanschaufnahme (4) hülsenartig sowie ineinander steckbar ausgebildet sind und Anschlagflächen (17,28) zur Bildung des gegenseitigen Anschlags (8) aufweisen.

4. Lageranordnung nach einem der vorhergehenden Ansprüche, **dadurch gekennzeichnet, dass** der Lagerflansch (3) und die Flanschaufnahme (4) umfangseitige, wechselweise zusammenwirkende Führungsflächen (15,26), insbesondere Passflächen, aufweisen, wobei der Lagerflansch (3) ein oder mehrere Aufnahmemittel (11) für ein Lager (12) eines Drehkörpers (5), für eine Dichtung (13) oder dgl. aufweist.

5. Lageranordnung nach einem der vorhergehenden Ansprüche, **dadurch gekennzeichnet, dass** die Flanschaufnahme (4) als gehäuseartiges Teil eines Geräts (2), insbesondere eines Industrieroboters, ausgebildet ist.

6. Gerät, insbesondere Industrieroboter, mit einer Lageranordnung (1), die einen Lagerflansch (3) mit einem darin gelagerten Drehkörper (5), eine gehäuseartige Flanschaufnahme (4), einen gegenseitigen axialen Anschlag (8) sowie eine Fixierung zur Sicherung der gegenseitigen Anschlagstellung von Lagerflansch (3) und Flanschaufnahme (4) aufweist, **dadurch gekennzeichnet, dass** die Lageranordnung (1) nach einem der Ansprüche 1 bis 5 ausgebildet ist.

## Claims

1. Bearing arrangement comprising a bearing flange (3) and a flange mount (4) with a longitudinal axis (6), these having a mutual axial stop (8) and a fixing means for securing the mutual stop position, wherein the fixing means is designed in the form of a wedge clamping means (9), which can be actuated transversely, in particular radially, in relation to the longitudinal axis (6), wherein the wedge clamping means (9) clamps the bearing flange (3) and the flange mount (4) axially into the mutual stop position and
the wedge clamping means (9) comprises clamping elements (18, 19) which have a wedge surface (20) and are arranged alternately on the bearing flange (3) and on the flange mount (4), are oriented transversely, in particular radially, in relation to the longitudinal axis (6) and can grip one inside the other in form-fitting manner,
**characterized in that**
the clamping element (18) arranged on the bearing flange (3) is designed in the form of a circumferential, annular groove (21) and the other clamping element (19), which is arranged on the flange mount (4), is designed in the form of one or more radial spring pins (23), in particular screw-connection pins, wherein
the groove (21) has a larger axial width than the spring pin (23) and comprises a sloping side wall (22), which faces the stop (8) and forms a wedge surface (20).

2. Bearing arrangement according to Claim 1, **characterized in that** the wedge clamping means (9) is arranged circumferentially between the bearing flange (3) and the flange mount (4).

3. Bearing arrangement according to one of the preceding claims, **characterized in that** the bearing flange (3) and the flange mount (4) are designed in a sleeve-like manner, and such that they can be inserted one inside the other, and comprise stop surfaces (17,28) for forming the mutual stop (8).

4. Bearing arrangement according to one of the preceding claims, **characterized in that** the bearing flange (3) and the flange mount (4) comprise circumferential, mutually interacting guide surfaces (15,26), in particular mating surfaces, wherein the bearing flange (3) comprises one or more receiving means (11) for a bearing (12) of a body of rotation (5), for a seal (13) or the like.

5. Bearing arrangement according to one of the preceding claims, **characterized in that** the flange mount (4) is designed in the form of a housing-like part of an apparatus (2), in particular of an industrial robot.

6. Apparatus, in particular industrial robot, having a bearing arrangement (1), which comprises a bearing flange (3) with a body of rotation (5) mounted therein, also comprising a housing-like flange mount (4), further comprising a mutual axial stop (8) and additionally comprising a fixing means for securing the mutual stop position of the bearing flange (3) and flange mount (4), **characterized in that** the bearing arrangement (1) is designed according to one of Claims 1 to 5.

## Revendications

1. Ensemble palier, comprenant une bride (3) de palier et un réceptacle (4) de bride avec un axe longitudinal (6), qui présentent une butée axiale mutuelle (8) et une fixation pour assurer la position de butée mutuelle, la fixation étant conçue sous la forme d'un moyen (9) de serrage par coin qui est apte à être actionné transversalement, en particulier radialement, par rapport à l'axe longitudinal (6), le moyen (9) de serrage par coin serrant axialement la bride (3) de palier et le réceptacle (4) de bride dans la position de butée mutuelle, et
le moyen (9) de serrage par coin présente des éléments de serrage (18, 19) agencés alternativement sur la bride (3) de palier et sur le réceptacle (4) de bride, orientés transversalement, en particulier radialement, par rapport à l'axe longitudinal (6) et aptes à venir en engagement par complémentarité de forme, avec une surface de coin (20), **caractérisé en ce que**
l'élément de serrage (18) agencé sur la bride (3) de palier est conçu sous la forme d'une rainure (21) périphérique et annulaire, et l'autre élément de serrage (19) agencé sur le réceptacle (4) de bride est conçu sous la forme d'une ou plusieurs pions de serrage radiaux (23), en particulier sous la forme de pions filetés,
la rainure (21) a une largeur axiale supérieure à celle du pion de serrage (23) et présente une paroi latérale (22) inclinée vers la butée (8) et formant une surface de coincement (20).

2. Ensemble palier selon la revendication 1, **caractérisé en ce que** le moyen (9) de serrage par coin est agencé sur la circonférence entre la bride (3) de palier et le réceptacle (4) de bride.

3. Ensemble palier selon l'une des revendications précédentes, **caractérisé en ce que** la bride (3) de palier et le réceptacle (4) de bride sont conçus sous forme de manchons et sont aptes à être emboîtés l'un dans l'autre, et présentent des surfaces de butée (17, 28) pour former la butée mutuelle (8).

4. Ensemble palier selon l'une des revendications précédentes, **caractérisé en ce que** la bride (3) de palier et le réceptacle (4) de bride présentent des surfaces de guidage périphériques (15, 26) coopérant de manière alternée, en particulier des surfaces d'ajustement, la bride (3) de palier présentant un ou plusieurs moyens de réception (11) pour un palier (12) d'un corps rotatif (5), pour un joint d'étanchéité (13) ou similaire.

5. Ensemble palier selon l'une des revendications précédentes, **caractérisé en ce que** le réceptacle (4) de bride est conçu sous la forme d'une partie en forme de boîtier d'un appareil (2), en particulier d'un robot industriel.

6. Appareil, en particulier robot industriel, avec un ensemble palier (1) qui présente une bride (3) de palier, avec un corps rotatif (5) logé à l'intérieur d'elle, un réceptacle (4) de bride en forme de boîtier, une butée axiale mutuelle (8) ainsi qu'une fixation pour sécuriser la position de butée mutuelle de la bride (3) de palier et du réceptacle (4) de bride, **caractérisé en ce que** l'ensemble palier (1) est conçu selon l'une des revendications 1 à 5.
